# EUROPÄISCHE PATENTANMELDUNG

(11) **EP 3 560 341 A1**
(43) Veröffentlichungstag der Anmeldung: **30.10.2019**
(21) Anmeldenummer: 19169293.8
(22) Anmeldetag: 15.04.2019
(51) Int. Cl.: A23C 19/068, A01J 25/00, A01J 25/02

(54) **VERFAHREN ZUR HERSTELLUNG VON PASTA FILATA-KÄSE**

(30) Priorität: 24.04.2018 DE 102018109768; 21.06.2018 DE 102018114957
(71) Anmelder: ALPMA Alpenland Maschinenbau GmbH, 83543 Rott am Inn (DE)
(72) Erfinder: Hubatschek, Josef, 83093 Bad Endorf (DE); Seemüller, Alois, 83043 Bad Aibling (DE); Strohn, Gisbert, 83123 Amerang (DE)
(74) Vertreter: Manitz Finsterwald Patent- und Rechtsanwaltspartnerschaft mbB

(57) **Zusammenfassung**

Die vorliegende Erfindung betrifft ein Verfahren zur Herstellung, insbesondere kontinuierlichen Herstellung von Pasta Filata-Käse, wobei insbesondere zunächst einem Transportsystem mit einer Mehrzahl von separaten Transportbehältnissen, insbesondere Bassinen in einem Eingangsabschnitt Dünnmilch zugeführt wird, im Bereich eines ersten Prozessabschnitts des Transportsystems Käsebruch aus der Dünnmilch erzeugt wird, insbesondere durch die Zugabe von Lab oder Säuerungskulturen, der erzeugte Käsebruch im Bereich eines zweiten Prozessabschnitts des Transportsystems verfestigt wird, insbesondere durch Schneiden, Rühren und/oder Erwärmen, der verfestigte Käsebruch im Bereich eines dritten Prozessabschnitts des Transportsystems für einen Säuerungszeitraum einem Säuerungsprozess ausgesetzt wird und der gesäuerten Käsebruch am Ende des Säuerungszeitraums in einem Ausgangsabschnitt des Transportsystems aus dem Transportsystem entnommen und einem nachfolgenden Prozessschritt zugeführt wird, in welchem der gesäuerte Käsebruch insbesondere portioniert und/oder filiert wird. Der Käsebruch verbleibt bis zur Entnahme des Käsebruchs nach dem Ende des Säuerungszeitraums in dem Transportsystem.

## Beschreibung

Die vorliegende Erfindung betrifft ein Verfahren zur Herstellung, insbesondere kontinuierlichen Herstellung von Pasta Filata-Käse.

Bei der Herstellung von Pasta Filata-Käse wird aus Dünnmilch als Ausgangsprodukt ein Endprodukt, beispielsweise Mozzarella, erzeugt, wobei bekannte Verfahren in mehrere Verfahrensschritte unterteilt sind. Die verschiedenen Verfahrensschritte werden herkömmlicherweise in separaten und voneinander getrennten Anlagensystemen durchlaufen, welche durchaus eine gewisse Diversität aufweisen können. Gemäß der Abfolge der Verfahrensschritte muss ein Zwischenprodukt der Pasta-Filata-Käse Herstellung, nämlich der Käsebruch, hierbei von einem der separaten Anlagesysteme in ein nächstes überführt werden. Insbesondere erfordern die Verfahren, dass das Zwischenprodukt der Pasta Filata-Käse Herstellung für eine bestimmte Zeitspanne, der sogenannten Säuerungszeit, vor der Weiterverarbeitung ruht, in der der pH-Wert des Zwischenprodukts auf einen Wert in einem gewünschten Bereich sinkt. Herkömmlicherweise erfolgt dieser Verfahrensschritt der sogenannten "Bruchsäuerung" oder "Bruchreifung" in einem separaten Anlagesystem, welches sehr aufwendig und kostspielig ausgebildet sein kann. Darüber hinaus unterbricht die Überführung des Zwischenprodukts in besagtes Anlagesystem den Ablauf der Verfahren, was in Hinblick auf deren Effizienz und eine durch die Verfahren erreichbare Produktionsmenge von Pasta Filata-Käse problematisch ist.

Es ist daher Aufgabe der Erfindung, ein Verfahren zur Herstellung von Pasta Filata-Käse zu schaffen, das einfacher und kostengünstiger durchzuführen ist und das eine kontinuierliche und effiziente Herstellung von Pasta Filata-Käse erlaubt.

Die Aufgabe wird durch ein Verfahren gemäß Anspruch 1 gelöst. Dabei wird zunächst einem Transportsystem mit einer Mehrzahl von separaten Transportbehältnissen, insbesondere Bassinen in einem Eingangsabschnitt Dünnmilch zugeführt. Im Bereich eines ersten Prozessabschnitts des Transportsystems wird aus der Dünnmilch Käsebruch erzeugt, insbesondere durch die Zugabe von Lab oder Säuerungskulturen. Der erzeugte Käsebruch wird im Bereich eines zweiten Prozessabschnitts des Transportsystems verfestigt, insbesondere durch Schneiden, Rühren und/oder Erwärmen. Anschließend wird der verfestigte Käsebruch im Bereich eines dritten Prozessabschnitts des Transportsystems für einen Säuerungszeitraum einem Säuerungsprozess ausgesetzt. Am Ende des Säuerungszeitraums wird der gesäuerten Käsebruch in einem Ausgangsabschnitt des Transportsystems aus dem Transportsystem entnommen und einem nachfolgenden Prozessschritt zugeführt wird, in welchem der gesäuerte Käsebruch insbesondere portioniert und/oder filiert wird. Der Käsebruch verbleibt während dem vorstehend skizzierten Prozess, d.h. von dem Eingangsabschnitt bis zur Entnahme des Käsebruchs nach dem Ende des Säuerungszeitraums, in dem Transportsystem.

Das Verfahren basiert somit auf einem Transportsystem, das die separaten Transportbehältnisse nacheinander allen notwendigen Verfahrensabschnitten zur Herstellung von Pasta Filata-Käse zuführt. Alle notwendigen Schritte können demnach mit und/oder innerhalb ein und derselben technischen Anlage durchgeführt werden, wobei sich der dritte Prozessabschnitt, die sogenannte Bruchreifung, ohne Systemwechsel direkt an den ersten und zweiten Prozessabschnitt, der sogenannten Bruchbereitung, anschließt. Hierdurch wird einerseits das Verfahren erheblich vereinfacht und optimiert, andererseits werden auch die Konzeption einer verfahrenstechnischen Anlage zur Herstellung von Pasta Filata-Käse vereinfacht und der Aufwand zum Aufbau und Betrieb einer solchen Anlage reduziert.

Die Transportbehältnisse können als Bassinen ausgebildet sein und/oder aus Metall oder Kunststoff gefertigt sein, wobei eine Kunststofffertigung bevorzugt ist. Das Fassungsvermögen der Transportbehältnisse kann beispielsweise im Bereich von 100 Litern bis 1000 Litern liegen, wobei die Transportbehältnisse insbesondere einheitlich ausgeformt sein können und insbesondere die gleichen Dimensionen und/oder das gleiche Fassungsvermögen aufweisen können. Denkbar ist jedoch auch, dass sich die Transportbehältnisse in ihren Dimensionen und/oder Fassungsvermögen unterscheiden.

Eine vergleichsweise kompakte Ausgestaltung der Transportbehältnisse geht mit dem Vorteil einher, dass der Inhalt während der verschiedenen Prozessabschnitte besser überwacht und kontrolliert werden kann. Beispielsweise ist die Zeitspanne, die der Käsebruch benötigt, um während der Bruchreifung seinen ph-Wert auf einen gewünschten Wert zu reduzieren, nicht konstant, sondern kann von Faktoren wie beispielsweise der Zusammensetzung der zugeführten Dünnmilch, der Temperatur oder der Aktivität einer eingebrachten Säuerungskultur abhängen. Es kann daher erforderlich sein, die Dauer der Käsebruchreifung entsprechend anzupassen und anhand überwachter Parameter zu verändern. Auch kann es sinnvoll sein, dass während der Bruchreifung die Temperatur des Käsebruchs gezielt verändert wird, beispielsweise direkt durch Erhitzen des Käsebruchs innerhalb des Transportbehältnisses, aber auch indirekt über eine Temperierung einer Wandung des Transportbehältnisse bzw. über eine Steuerung der Umgebungstemperatur der Transportbehältnisse.

Das Verfahren ermöglicht einen kontinuierlichen Prozessablauf, wobei die einzelnen Transportbehältnisse durch einen fortlaufenden und/oder getakteten Vorschub des Transportsystems nacheinander den einzelnen Prozessabschnitten rezeptgesteuert und reproduzierbar zugeführt werden. Es versteht sich, dass das Transportsystem durch eine geeignete Steuereinrichtung gesteuert wird, die bevorzugt auch eine bedarfsgerechte Anpassung des Vorschubs ermöglicht. Diese kann auch automatisch auf Basis von Zustandsparametern des Systems und/oder des geförderten Produkts in den Transportbehältnissen erfolgen. Die Zustandsparameter können durch geeignete Sensoren ermittelt werden.

Bevorzugte Ausführungsformen der Erfindung sind den abhängigen Ansprüchen sowie der Beschreibung zu entnehmen.

Gemäß einer Ausführungsform ist das Transportsystem zwischen dem Eingangsabschnitt und dem Ausgangsabschnitt unterbrechungsfrei ausgestaltet. Das Verfahren durchläuft somit einen ununterbrochenen Prozess aus, der mit der Zuführung von Dünnmilch beginnt, aus der über verschiedene Verfahrensabschnitte gesäuerter Käsebruch erzeugt wird, und der mit der Entnahme des erzeugten Käsebruchs endet. Hierfür ist das Transportsystem derart ausgebildet, dass es die Transportbehältnisse durch den gesamten Prozess führt und den entsprechenden Verfahrensabschnitten zuführt.

Gemäß einer weiteren Ausführungsform werden die Transportbehältnisse zwischen den Abschnitten und/oder im Bereich der Abschnitte getaktet und/oder kontinuierlich bewegt. Hierfür ist das Transportsystem dazu ausgebildet, die Transportbehältnisse mit einer an den jeweiligen Verfahrensabschnitt angepassten Geschwindigkeit zu transportieren. Beispielsweise kann vorgesehen sein, dass das Transportsystem die Transportbehältnisse während der Säuerung bzw. der Bruchreifung nicht oder nur vergleichsweise langsam bewegt. Die Vorschubgeschwindigkeit - ob getaktet oder kontinuierlich - der Bassinen muss somit nicht zwingend während dem gesamten Verfahren konstant sein, sondern kann durchaus variieren.

Bevorzugt werden die Transportbehältnisse nach der Entnahme des Käsebruchs einem Reinigungssystem zugeführt, in dem die Transportbehältnisse gereinigt werden. Die Reinigung mittels des Reinigungssystems kann als separate Einheit vorgesehen sein oder als zusätzlicher Verfahrensabschnitt in das Transportsystem integriert sein, der sich an den Ausgangsabschnitt anschließt. Denkbar ist hierbei, dass die Transportbehältnisse in einem Reinigungsabschnitt zunächst gereinigt werden und danach mittels des Transportsystems wieder dem Eingangsabschnitt zugeführt werden. Das Transportsystem kann sogar einen im Wesentlichen geschlossenen Kreislauf bilden.

Gemäß noch einer weiteren Ausführungsform wird nach dem Verfestigen des Käsebruchs und vor dem Säuerungsprozess zumindest ein Teil der flüssigen Bestandteile (Molke) des Inhalts der Transportbehältnisse abgetrennt, insbesondere wobei die abgetrennten flüssigen Bestandteile aus den Transportbehältnissen entfernt werden. Je nach gewünschter Prozessführung oder Käserezeptur ist es durch diesen zusätzlichen Verfahrensabschnitt möglich, in dem Übergang von der Bruchbereitung zum Säuerungsprozess einen definierbaren Teil der flüssigen Bestandteile aus den Transportbehältnissen abzuführen, ohne das erfindungsgemäße Verfahren zu unterbrechen. Dieser Verfahrensabschnitt kann je nach Vorgabe bzw. Erfordernis an jeder beliebigen Stelle innerhalb des Verfahrensabschnitts der Bruchreifung wiederholt werden. Dabei können die flüssigen Bestandteile beispielsweise durch Absaugen oder Abschöpfen entfernt werden. Eine Fest-Flüssig-Phasentrennung kann auch mechanisch erfolgen, beispielsweise mittels eines Siebs oder Gitters.

Bevorzugt wird nach der Abtrennung zumindest eines Teils der flüssigen Bestandteile der Inhalt von zwei oder mehreren Transportbehältnissen bedarfsgerecht zusammengeführt, insbesondere in einem Transportbehältnis des Transportsystems. Hierbei kann es sich um ein zunächst leeres Transportbehältnis handeln, das vom Transportsystem neu bereitgestellt wird. Denkbar ist aber auch, dass der Inhalt der Transportbehältnisse in einem der bereits teilweise mit Käsebruch gefüllten Transportbehältnisse zusammengeführt wird. Entleerte Behältnisse werden dann entnommen. Durch die Zusammenführung lässt sich die Zahl der im Verfahren benötigten Transportbehältnisse reduzieren oder minimieren, ohne die Produktionsrate an erzeugtem Pasta Filata-Käse, d.h. die Menge des pro Zeiteinheit am Ausgangsabschnitt entnehmbaren Käsebruchs, zu verkleinern. Die geringere Zahl von benötigten Transportbehältnissen ermöglicht eine möglichst platzsparende und anlagentechnisch einfachere Ausgestaltung des Transportsystems, wodurch sich das Verfahren kostengünstig ausführen lässt.

Gemäß einer Ausführungsform werden Transportbehältnisse, die im Zuge des Zusammenführens der Inhalte zweier oder mehrerer Transportbehältnisse entleert wurden, einem Reinigungssystem zugeführt. Hierbei können die entleerten und damit im weiteren Verfahren nicht mehr benötigten Transportbehältnisse im Transportsystem verbleiben und dem Verfahrensabschnitt Reinigung zugeführt werden. Ist ein vom Transportsystem separates Reinigungssystem vorgesehen, so können die entleerten Transportbehältnisse aus dem Transportsystem entnommen werden und danach dem separaten Reinigungssystem zugeführt werden. In beiden Fällen können die gereinigten Transportbehältnisse im Anschluss an die Reinigung wieder dem Transportsystem am Eingangsabschnitt zu Verfügung stehen, um einen weiteren Zyklus des Verfahrens zu durchlaufen.

Die Säuerung oder Reifung des Käsebruchs kann unter Molke geschehen. Es ist aber auch möglich, eine Drainage der Molke vorzusehen. Zu diesem Zweck kann der erzeugte Käsebruch - vor oder nach dem Verfestigen des Käsebruchs im Bereich des zweiten Prozessabschnitts - in zumindest einen jeweils in den Transportbehältnissen angeordneten Drainageabschnitt, insbesondere Drainagekorb, überführt werden, um aus dem Käsebruch austretende Molke abzuführen. Bevorzugt verbleibt der Käsebruch bis zum Abschluss des Säuerungsprozesses) in dem Drainageabschnitt. Eine frühere Entnahme ist aber auch denkbar.

Insbesondere wird die aus dem Käsebruch austretende Molke aus dem Drainageabschnitt entfernt. Dies kann aktiv geschehen (z.B. durch Absaugen). Bevorzugt ist jedoch ein passives Entfernen der Molke. Beispielsweise ist der Drainageabschnitt ein korbartiges Gebilde, das Perforationen aufweist. Aus dem Käsebruch austretende Molke kann durch die Perforationen austreten, beispielsweise noch unten abtropfen. Die austretende Molke kann in einem Sammelabschnitt des jeweiligen Transportbehältnisses gesammelt werden, beispielsweise im Bereich eines Bodenabschnitts einer Transportbassine. Die gesammelte Molke kann einer weiteren Verarbeitung zugeführt werden.

Ein zweiter Aspekt der Erfindung betrifft eine Vorrichtung zur Herstellung, insbesondere kontinuierlichen Herstellung, von Pasta Filata-Käse gemäß einem erfindungsgemäßen Verfahren, umfassend ein Transportsystem mit einer Mehrzahl von separaten Transportbehältnissen, insbesondere Bassinen, wobei das Transportsystem zwischen einem Eingangsabschnitt, in dem Dünnmilch von den Transportbehältnissen aufnehmbar ist, und einem Ausgangsabschnitt, in dem ein gesäuerter Käsebruch am Ende eines Säuerungszeitraums aus den Transportbehältnissen entnehmbar ist, unterbrechungsfrei ausgestaltet ist.

Das Transportsystem kann beispielsweise derart ausgebildet sein, dass schienenartige Transportpfade definiert werden, mittels derer die Transportbehältnisse den entsprechenden Prozessabschnitten zugeführt werden. Dabei ist beispielsweise denkbar, dass die Transportbehältnisse Räder aufweisen, die auf den schienenartigen Transportpfaden lagern und es ermöglichen, die Transportbehältnisse von einem Abschnitt zum nächsten zu transportieren. In einer weiteren Ausführungsform können die Transportbehältnisse beispielsweise an Rollen hängend gelagert sein, die in den schienenartigen Pfaden gehalten werden und die eine Bewegung der Transportbehältnisse entlang den schienenartigen Transportpfaden erlauben. Abhängig vom jeweils vorliegenden Anforderungsprofil sind jedoch auch andere Ausführungsformen des Transportsystems - z.B. hinsichtlich des Antriebs des Systems und/oder hinsichtlich der Führung der Behältnisse - und der zugehörigen Transportbehältnisse denkbar.

Der Transport der Transportbehältnisse im Transportsystem kann manuell, halbautomatisch oder vollautomatisch erfolgen. Bevorzugt ist das Transportsystem mit einer Steuereinrichtung verbunden, die die Zuführung der Transportbehältnisse zu den entsprechenden Verfahrensabschnitten steuert, d.h. die insbesondere die Geschwindigkeit der Transportbehältnisse im Transportsystem in Abhängigkeit von vorbestimmten Parametern und/oder von Zustandsparametern des Systems und/oder des Inhalts der Transportbehältnisse in den entsprechenden Verfahrensabschnitten anpasst und/oder ändert. Das Transportsystem kann in einem Taktbetrieb oder kontinuierlich betrieben werden. Auch eine Kombination aus einem getakteten Vorschub (z.B. beim Befüllen der Behältnisse) und einem kontinuierlichen Vorschub der Behältnisse (z.B. während der Säuerung) ist denkbar. Die Steuereinrichtung kann ein Bestandteil einer übergeordneten Anlagensteuerung sein, welche alle Schritte des Verfahrens und vor- oder nachgeschalteter oder beigeordneter Anlagenteile überwacht und/oder steuert, oder kann zumindest mit dieser verbunden sein. Die Steuereinrichtung kann aber natürlich auch als separate Einrichtung ohne Verbindung zu einer übergeordneten Anlagensteuerung ausgebildet sein.

Gemäß einer Ausführungsform umfasst die Vorrichtung ferner eine Vorrichtung, die zum Verfestigen von aus der Dünnmilch erzeugtem Käsebruch in den Transportbehältnissen ausgebildet ist, insbesondere durch Schneiden, Rühren und/oder Erwärmen. Dabei wird das durch die Zugabe von Lab oder Säuerungskulturen koagulierte Milcheiweiß der Dünnmilch zu einem festen Agglomerat, sogenanntem Bruchkorn, verfestigt. Die Vorrichtung kann verschiedenartige Ausformungen aufweisen, die dazu ausgebildet sind, den Inhalt der Transportbehältnisse zu zerkleinern. Nach dem Verfestigen des Käsebruchs, der sogenannten Bruchbereitung, besteht das überwiegende Füllvolumen des Transportbehältnisses aus flüssigen Bestandteilen, sogenannter freier Molke, in der die festen Bestanteile, d.h. der verfestigte Käsebruch, lagern. Typischerweise liegen hierbei die flüssige und die feste Phase im Verhältnis 9 zu 1 vor, d.h. um die 90% des Füllvolumens der Transportbehältnisse besteht aus freier Molke.

Um die nicht benötigten flüssigen Bestandteile aus dem Verfahren zu entfernen, kann die Vorrichtung bevorzugt ferner eine Vorrichtung umfassen, die zum Abtrennen zumindest eines Teils der flüssigen Bestandteile des Inhalts der Transportbehältnisse ausgebildet ist. Dabei kann die Vorrichtung derart ausgebildet sein, dass die flüssigen Bestandteile aus den Transportbehältnissen entfernt werden können, beispielsweise durch geeignetes Absaugen oder Abschöpfen der flüssigen Bestandteile. Es ist auch denkbar, dass die festen Bestandteile, beispielsweise mittels einer gitter- oder siebartigen Vorrichtung, aus den Transportbehältnissen entfernt werden und in andere Transportbehältnisse überführt werden. Dabei verbleibt der Käsebruch aber letztlich in dem Transportsystem. Die Transportbehältnisse mit den verbliebenen flüssigen Bestandteilen können in diesem Fall entleert werden und die freie Molke beispielsweise zu Molkeprodukten weiterverarbeitet werden.

Bevorzugt umfasst die Vorrichtung ferner eine Vorrichtung, welche dazu ausgebildet ist, nach der Abtrennung zumindest eines Teils der flüssigen Bestandteile den Inhalt zweier oder mehrerer Transportbehältnisse in einem Transportbehältnis zusammenzuführen. Bedingt durch die große Volumenabnahme des zu verarbeitenden Inhalts der Transportbehältnisse nach erfolgter Abtrennung der flüssigen Bestandteile ergibt sich somit die Möglichkeit, die Zahl der erforderlichen Transportbehältnisse im Transportsystem zu reduzieren, ohne die Produktionsrate der erzeugten Pasta Filata-Käse zu verkleinern. Durch die geringere Zahl von benötigten Transportbehältnisse kann das Transportsystem somit platzsparend ausgestaltet und der anlagentechnische Aufwand der Vorrichtung reduziert werden, wodurch sich die Vorrichtung kostengünstiger hergestellt und betrieben werden kann.

Gemäß einer Ausführungsform umfasst die Vorrichtung ferner eine Reinigungsvorrichtung zum Reinigen der Transportbehältnisse. Die Reinigungsvorrichtung kann als separate Einheit vorgesehen sein oder in das Transportsystem integriert sein. Denkbar ist hierbei, dass die Transportbehältnisse durch die Reinigungsvorrichtung gereinigt werden und danach mittels des Transportsystems wieder dem Eingangsabschnitt zugeführt werden, was grundsätzlich eine Ausgestaltung ermöglicht, bei der sich die Transportbehältnisse im Transportsystem in einem im Wesentlichen geschlossenen Kreislauf bewegen. Eine möglichst einfache Ausformung der Transportbehältnisse bietet den Vorteil, dass das Reinigungssystem kostengünstig realisierbar ist und die Reinigung schnell und in einfacher Weise durchführbar ist.

Gemäß einer weiteren Ausführungsform weist zumindest ein Teil der Transportbehältnisse jeweils zumindest einen Drainageabschnitt auf, insbesondere wobei der Drainageabschnitt zumindest ein in das jeweilige Transportbehältnis zeitweise einsetzbares Element umfasst, durch den Käsebruch zur Abtrennung von Molke aufnehmbar ist. Beispielsweise ist das einsetzbare Element ein korbartiges Gebilde, in dem der Käsebruch abgelegt wird. Das einsetzbare Element kann zumindest abschnittsweise korbartig oder siebartig gestaltet sein und/oder Perforationen aufweisen, durch die aus dem Käsebruch austretende Molke abfließen kann. Alternative Ausgestaltungen des Drainageabschnitts bzw. des einsetzbaren Elements sind denkbar. Beispielsweise kann auch ein Trennboden vorgesehen sein, der in eines der Transportbehältnisse eingesetzt wird, um den Drainageabschnitt von einem Sammelabschnitt zur Aufnahme der austretenden Molke trennt.

Nachfolgend wird die Erfindung bespielhaft anhand vorteilhafter Ausführungsformen unter Bezugnahme auf die beigefügte Zeichnung beschrieben. Es zeigen, jeweils schematisch,
- Fig. 1: eine Ausführungsform eines Transportbehältnisses einer erfindungsgemäßen Vorrichtung zur Durchführung eines erfindungsgemäßen Verfahrens zur Herstellung von Pasta Filata-Käse
- Fig. 2: eine Ausführungsform einer erfindungsgemäßen Vorrichtung zur Durchführung eines erfindungsgemäßen Verfahrens zur Herstellung von Pasta Filata-Käse.
- Fig. 3: zeigt eine weitere Ausführungsform eines Transportbehältnisses mit einem eingesetzten Drainageabschnitt.

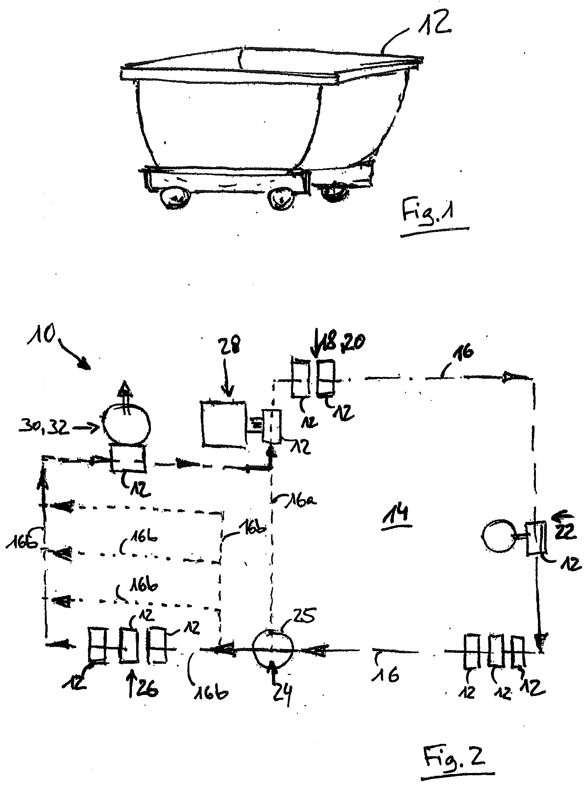

Fig. 1 zeigt die Ansicht eines Transportbehältnisses 12 einer erfindungsgemäßen Vorrichtung zur Durchführung eines erfindungsgemäßen Verfahrens zur Herstellung von Pasta Filata-Käse. Bei dieser Ausführungsform ist das Transportbehältnis als Bassine 12 ausgebildet, welche beispielsweise aus Kunststoff gefertigt sein kann. Die Bassine 12 umfasst eine nach oben hin offene Wanne, an deren unterem Ende Rollen angebracht sind, mittels derer sich die die Bassine 12 entlang schienenartiger Transportpfade 16 (siehe Fig. 2) bewegen lässt. Dabei liegt das Fassungsvermögen der Bassine 12 typischerweise zwischen 100 und 1000 Litern.

Fig. 2 zeigt eine Ausführungsform einer erfindungsgemäßen Vorrichtung 10 zur Durchführung eines erfindungsgemäßen Verfahrens zur Herstellung von Pasta Filata-Käse. Die Vorrichtung 10 umfasst ein Transportsystem 14, welches die Bassinen 12 durch einen fortlaufenden Vorschub nacheinander verschiedenen Prozessabschnitten zuführt. Das Transportsystem 14 umfasst eine Mehrzahl von, in dieser Ausführungsform im Wesentlichen gleichartigen, Bassinen 12, die entlang von Transportpfaden 16 getaktet und/oder kontinuierlich bewegt werden. Dazu kann das Transportsystem 14 beispielsweise einen (nicht gezeigten) Zahnrad- oder Kettenantrieb aufweisen, welcher mit den Bassinen 12 (bei Bedarf lösbar) verbunden ist und so den Vorschub bewirken kann. Es können auch andere Antriebssysteme zum Einsatz gelangen.

Das Transportsystem 14 wird von einer (nicht gezeigten) übergeordneten Steuereinrichtung gesteuert, welche die Taktung und/oder die Geschwindigkeit des Vorschubs der Transportbehältnisse entsprechend den Erfordernissen der jeweiligen Prozessabschnitte steuert.

Die Vorrichtung 10 mit dem Transportsystem 14 ist als geschlossener Kreislauf ausgebildet, in dem wesentliche Prozessschritte durchgeführt werden, die zur Herstellung von Pasta Filata-Käse notwendig sind. Dazu werden die Bassinen 12 zunächst einem Eingangsabschnitt 18 zugeführt, danach von dem Transportsystem 14 zu und durch alle Prozessabschnitte 20, 22, 24, 26 transportiert, bevor sie an einem Ausgangsabschnitt 30 entleert werden. Anschließend werden die Bassinen 12 wieder dem Eingangsabschnitt 18 zugeführt.

An dem Eingangsabschnitt 18 wird den Bassinen 12 nacheinander Dünnmilch zugeführt, z.B. mittels nicht gezeigter Leitungen. Ist eine Bassine 12 mit Dünnmilch gefüllt, so wird die Bassine 12 durch das Transportsystem 14 entlang des Transportpfades 16 um einen Strecke verschoben, die im Wesentlichen zumindest einer Länge der Bassine 12 - in Transportrichtung gesehen - entspricht. Gleichzeitig wird durch das Transportsystem 14 eine leere Bassine 12 dem Eingangsabschnitt 18 zugeführt, um auch sie mit Dünnmilch zu befüllen.

Im Bereich des Eingangsabschnitts 18 oder danach werden der Dünnmilch in den Bassinen 12 in einem ersten Prozessabschnitt 20 Säuerungskulturen und/oder Lab zugegeben, um die Erzeugung von Käsebruch in den Bassinen 12 anzuregen.

Beispielsweise ist eine Bassine 12 mit 1000 Litern Inhalt in 80 Sekunden gefüllt, entsprechend einer Füllrate der Vorrichtung 10 von 45 Bassinen pro Stunde. Die zugeführte Menge von 45000 Litern Dünnmilch pro Stunde entspricht dabei einer Herstellungsmenge von 5000 kg Pasta Filata-Käse pro Stunde. Andere ProzessParameter (z.B. Milch- oder Käasemengen, Füllraten, Fassungsvermögen und Anzahl der Bassinen, ...) sind aber auch ohne weiteres denkbar.

Durch diesen getakteten Vorschub können nacheinander beliebig viele Bassinen 12 mit Dünnmilch gefüllt werden, wobei eine Begrenzung ausschließlich durch den für die Vorrichtung 10 in einer Fertigungshalle zur Verfügung stehenden Raum gegeben ist. Dabei sind verschiedenartige Ausformungen der Transportpfade 16 denkbar, beispielsweise rechteckig wie in der der beschriebenen Ausführungsform oder auch schlangenartig, wodurch sich eine besonders kompakte Ausführung der Vorrichtung 10 bzw. des Transportsystems 14 erzielen lässt.

Ausgehend von dem Eingangsabschnitt 18 bzw. ersten Prozessabschnitt 20 werden die Bassinen 12 einem zweiten Prozessabschnitt 22 zugeführt, bei welchem der in der Bassinen 12 entstandene Käsebruch verfestigt wird. Dies kann insbesondere durch Schneiden, Rühren und/oder Erwärmen geschehen, wobei bei dem zweiten Prozessabschnitt 22 entsprechende Vorrichtungen wie Rührer, Heizaggregate usw. vorgesehen sind. Der Vorschub der Bassinen 12 in dem zweiten Prozessabschnitt 22 erfolgt mit einer an den Verfestigungsprozess angepasster Taktrate und/oder mit einer (quasi)-kontinuierlichen Vorschubgeschwindigkeit.

Nach dem zweiten Prozessabschnitt 22, dem Verfestigen des Käsebruchs, liegen in der Bassine 12 um die 90% des Volumens in flüssiger Form als freie Molke vor. Um einen Großteil dieser freien Molke von den besten Bestandteilen einer Bassinenfüllung zu trennen, werden die Bassinen 12 einem dritten Prozessabschnitt 24 zugeführt. Dort wird die freie Molke durch Absaugen aus der Bassinen 12 größtenteils entfernt, wobei darauf geachtet wird, dass der Käsebruch in der Bassine 12 verbleibt, d.h. durch geeignete Mittel wie beispielsweise Siebe zurückgehalten wird. Die abgetrennte Molke wird im Gegensatz zu dem Käsebruch aus dem Transportsystem und damit dem Herstellungsprozess entfernt und kann einer weiteren Verarbeitung zugeführt werden.

Nach der Abtrennung zumindest des Großteils der freien Molke wird der Käsebruch zweier oder mehrerer Bassinen 12 in einer Bassine 12 zusammengeführt, wobei der Inhalt von Bassinen 12 beispielsweise mittels einer Hebe-und Kippvorrichtung 25 in einer Bassine 12 vereinigt werden können. Die entleerten Bassinen 12 werden über einen Transportpfad 16a des Transportsystems 14 einem Reinigungssystem eines fünften Prozessabschnitts 28 zugeführt.

Während sich der erste, zweite und dritte Prozessabschnitt 20, 22, 24 unter dem Begriff Bruchbereitung zusammenfassen lassen, dient der vierte Prozessabschnitt 26 der Bruchreifung (Säuerung), in dem der ph-Wert des Käsebruchs kontinuierlich abgesenkt wird, bis er einen für Pasta Filata-Käse gewünschten Bereich erreicht. In diesem vierten Prozessabschnitt 26 verweilt der Käsebruch in den Bassinen 12 für etwa 120 bis 150 Minuten, wobei der Zeitdauer bzw. die Verweil- oder Reaktionszeit von Faktoren wie den verwendeten Säuerungskulturen, der Beschaffenheit der Dünnmilch, der Temperatur und Ähnlichem beeinflusst wird. Daher kann eine Überwachung des ph-Werts vorgesehen sein, um die Verweilzeit entsprechend verkürzen oder verlängern oder andere Prozessparameter anpassen zu können.

In dem vierten Prozessabschnitt 26 ruhen die Bassinen 12 innerhalb des Transportsystems 14 oder werden durch das Transportsystem 14 entlang einem Transportpfad 16b mit vergleichsweise geringer Geschwindigkeit (taktweise oder kontinuierlich) fortbewegt. Dieser Pfad 16b bewirkt eine Pufferung der Bassinen 12, um ausreichend Zeit zur Säuerung des Käsebruchs zur Verfügung zu stellen. Er umfasst im dargestellten Beispiel parallele Zweige, die wieder zusammengeführt werden, was sich als platzsparend erwiesen hat. Eine Pufferung der Bassinen 12 kann bei Bedarf auch an anderen Stellen des Pfads 16 vorgesehen sein.

Es kann zusätzlich vorgesehen sein, dass der vierte Prozessabschnitt 28 an einer oder mehreren Stellen ein Vorrichtung zum Rühren des Käsebruchs in den Bassinen 12 aufweist, um den Käsebruch gezielt in Bewegung zu halten und eine ausreichende Vermischung des Käsebruchs in den Bassinen 12 zu erreichen.

Nach der Beendigung der Bruchreifung in dem vierten Prozessabschnitt 26 werden die Bassinen 12 durch das Transportsystem 14 dem Ausgangsabschnitt 30 zugeführt, bei dem der gesäuerte Käsebruch aus den Bassinen 12 entnommen wird, um in einem - im vorliegenden Ausführungsbeispiel direkt anschließenden - sechsten Prozessabschnitt 32 portioniert und/oder filiert zu werden.

Die entleerten Bassinen 12 werden dem fünften Prozessabschnitt 28 zugeführt, bei dem die Bassinen 12 durch das Reinigungssystem gereinigt werden. Die Reinigung der entleerten Bassinen 12 ist dabei im vorliegenden Ausführungsbeipsiel in das Transportsystem integriert, d.h. die Reinigung erfolgt während des laufenden Betriebs der Vorrichtung 10. Eine Unterbrechung der Produktion, um die Bassinen 12 zu reinigen, ist daher nicht notwendig.

Nach erfolgter Reinigung werden die Bassinen 12 wieder über das Transportsystem 14 dem Eingangsabschnitt 18 zugeführt, um in einem neuen Produktionszyklus Dünnmilch aufnehmen zu können.

Zwischen den Abschnitten 18 und 30 verbleibt die Dünnmilch bzw. der daraus entstandene Käsebruch somit in dem System 14, insbesondere auch während der Bruchreifung. Durch das erfindungsgemäße Verfahren und die erfindungsgemäße Vorrichtung ist eine optimierte Prozessführung sichergestellt, die eine durchgängige Nachverfolgung der Prozessabschnitte in einer gleichartigen Abfolge mit gleichartigen Einrichtungen bzw. Werkzeugen darstellt und die Konstanz und Reproduzierbarkeit des Herstellungsprozesses erhöht.

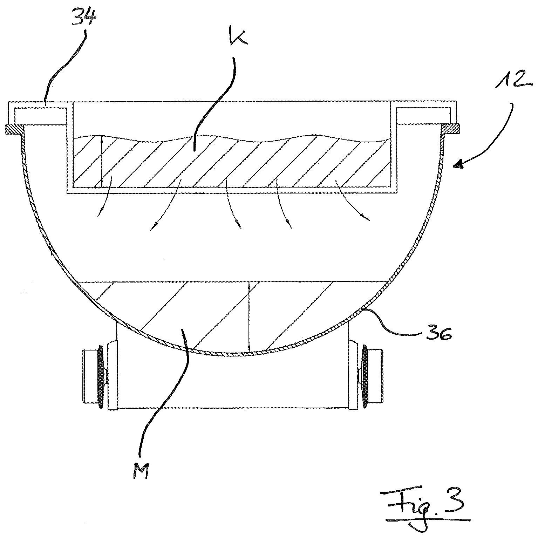

Wie eingangs erläutert wurde, kann der erzeugte Käsebruch - in Fig. 3 mit dem Bezugszeichen K gekennzeichnet - zeitweise, bevorzugt bis zum Abschluss der Bruchreifung, in einem Drainageabschnitt der Bassinen 12 angeordnet werden, um aus dem Käsebruch austretende Molke abführen zu können. Im Ausführungsbeispiel gemäß Fig. 3 ist der Drainageabschnitt ein Korb 34, der in eine der Bassinen 12 einsetzbar ist. Der Korb 34 weist zumindest in einem Bodenabschnitt Perforationen auf, durch die aus dem Käsebruch austretende Molke nach unten aus dem Korb 34 austreten kann. Die austretende und nach unten abtropfende Molke (schematisch dargestellt als Pfeile) wird in einem Sammelbereich 36 im Bodenbereich der Bassine 12 gesammelt. Die gesammelte Molke - in Fig. 3 mit dem Bezugszeichen M gekennzeichnet - kann einer weiteren Verarbeitung zugeführt werden.

Um den Käsebruch K zu entnehmen, insbesondere nach Abschluss der Bruchreifung, wird der Korb 34 entnommen und/oder die Bassine 12 wird mit dem Korb 34, der in diesem Fall bevorzugt an der Bassine 12 (lösbar) befestigt ist, gekippt. Der Korb 34 kann anschließend gereinigt werden, gegebenenfalls zusammen mit der Bassine 12 oder separat.

### Bezugszeichenliste

- 10: Vorrichtung zur Herstellung von Pasta Filata-Käse
- 12: Bassine
- 14: Transportsystem
- 16: Transportpfad
- 16a: Transportpfad
- 16b: Transportpfad
- 18: Eingangsabschnitt
- 20: erster Prozessabschnitt
- 22: zweiter Prozessabschnitt
- 24: dritter Prozessabschnitt
- 25: Hebe- und Kippvorrichtung
- 26: vierter Prozessabschnitt
- 28: fünfter Prozessabschnitt
- 30: Ausgangsabschnitt
- 32: sechster Prozessabschnitt
- 34: Drainagekorb
- 36: Sammelbereich

- K: Käsebruch
- M: Molke

## Patentansprüche

1. Verfahren zur Herstellung, insbesondere kontinuierlichen Herstellung von Pasta Filata-Käse, wobei
- zunächst einem Transportsystem (14) mit einer Mehrzahl von separaten Transportbehältnissen (12), insbesondere Bassinen in einem Eingangsabschnitt (18) Dünnmilch zugeführt wird,
- im Bereich eines ersten Prozessabschnitts (20) des Transportsystems (14) Käsebruch aus der Dünnmilch erzeugt wird, insbesondere durch die Zugabe von Lab oder Säuerungskulturen,
- der erzeugte Käsebruch im Bereich eines zweiten Prozessabschnitts (22) des Transportsystems (14) verfestigt wird, insbesondere durch Schneiden, Rühren und/oder Erwärmen,
- der verfestigte Käsebruch im Bereich eines dritten Prozessabschnitts (24) des Transportsystems (14) für einen Säuerungszeitraum einem Säuerungsprozess ausgesetzt wird und
- der gesäuerten Käsebruch am Ende des Säuerungszeitraums in einem Ausgangsabschnitt (30) des Transportsystems (14) aus dem Transportsystem (14) entnommen und einem nachfolgenden Prozessschritt (32) zugeführt wird, in welchem der gesäuerte Käsebruch insbesondere portioniert und/oder filiert wird,
wobei der Käsebruch bis zur Entnahme des Käsebruchs nach dem Ende des Säuerungszeitraums in dem Transportsystem (14) verbleibt.

2. Verfahren nach Anspruch 1, wobei das Transportsystem (14) zwischen dem Eingangsabschnitt (18) und dem Ausgangsabschnitt (30) unterbrechungsfrei ausgestaltet ist.

3. Verfahren nach zumindest einem der vorstehenden Ansprüche, wobei die Transportbehältnisse (12) zwischen den Abschnitten und/oder im Bereich der Abschnitte getaktet und/oder kontinuierlich bewegt werden.

4. Verfahren nach zumindest einem der vorstehenden Ansprüche, wobei die Transportbehältnisse (12) nach der Entnahme des Käsebruchs einem Reinigungssystem (28) zugeführt werden, in dem die Transportbehältnisse gereinigt (12) werden.

5. Verfahren nach zumindest einem der vorstehenden Ansprüche, wobei nach dem Verfestigen des Käsebruchs und vor dem Säuerungsprozess zumindest ein Teil der flüssigen Bestandteile des Inhalts der Transportbehältnisse (12) abgetrennt wird, insbesondere wobei die abgetrennten flüssigen Bestandteile aus den Transportbehältnissen (12) entfernt werden.

6. Verfahren nach Anspruch 5, wobei nach der Abtrennung zumindest eines Teils der flüssigen Bestandteile der Inhalt von zwei oder mehreren Transportbehältnissen (12) bedarfsgerecht zusammengeführt wird, insbesondere in einem Transportbehältnis (12) des Transportsystems (14).

7. Verfahren nach Anspruch 6, wobei Transportbehältnisse (14), die im Zuge des Zusammenführens der Inhalte zweier oder mehrerer Transportbehältnisse (12) entleert wurden, aus dem Transportsystem (14) entnommen und einem Reinigungssystem (28) zugeführt werden.

8. Verfahren nach zumindest einem der vorstehenden Ansprüche, wobei der erzeugte Käsebruch - vor oder nach dem Verfestigen des Käsebruchs im Bereich des zweiten Prozessabschnitts (22) - in zumindest einen jeweils in den Transportbehältnissen (12) angeordneten Drainageabschnitt, insbesondere Drainagekorb (34), überführt wird, um aus dem Käsebruch austretende Molke abzuführen.

9. Verfahren nach Anspruch 8, wobei der Käsebruch bis zum Abschluss des Säuerungsprozesses im Bereich des dritten Prozessabschnitts (24) in dem Drainageabschnitt (34) verbleibt.

10. Verfahren nach Anspruch 8 oder 9, wobei aus dem Käsebruch austretende Molke aus dem Drainageabschnitt (34) aktiv oder passiv entfernt wird, insbesondere wobei die austretende Molke in einem Sammelabschnitt (36) des jeweiligen Transportbehältnisses (12) gesammelt wird.

11. Vorrichtung (10) zur Herstellung, insbesondere kontinuierlichen Herstellung von Pasta Filata-Käse nach einem Verfahren des Anspruchs 1, umfassend ein Transportsystem (14) mit einer Mehrzahl von separaten Transportbehältnissen (12), insbesondere Bassinen, wobei das Transportsystem (14) zwischen einem Eingangsabschnitt (18), in dem Dünnmilch von den Transportbehältnissen (12) aufnehmbar ist, und einem Ausgangsabschnitt (30), in dem ein gesäuerter Käsebruch am Ende eines Säuerungszeitraums aus den Transportbehältnissen (12) entnehmbar ist, unterbrechungsfrei ausgestaltet ist.

12. Vorrichtung (10) nach Anspruch 11, ferner umfassend eine Vorrichtung (22), die zum Verfestigen von aus der Dünnmilch erzeugtem Käsebruch in den Transportbehältnissen (12) ausgebildet ist, insbesondere durch Schneiden, Rühren und/oder Erwärmen.

13. Vorrichtung (10) nach Anspruch 11 oder 12, ferner umfassend eine Vorrichtung (24), die zum Abtrennen zumindest eines Teils der flüssigen Bestandteile des Inhalts der Transportbehältnisse (12) ausgebildet ist, insbesondere wobei die Vorrichtung ferner eine Vorrichtung (25) umfasst, welche dazu ausgebildet ist, nach der Abtrennung zumindest eines Teils der flüssigen Bestandteile den Inhalt zweier oder mehrerer Transportbehältnisse (12) in einem Transportbehältnis (12) zusammenzuführen.

14. Vorrichtung (10) nach zumindest einem der Ansprüche 11 bis 13, ferner umfassend eine Reinigungsvorrichtung (28) zum Reinigen der Transportbehältnisse (12).

15. Vorrichtung (10) nach zumindest einem der Ansprüche 11 bis 14, wobei zumindest ein Teil der Transportbehältnisse (12) jeweils zumindest einen Drainageabschnitt (34) aufweisen, insbesondere wobei der Drainageabschnitt zumindest ein in das jeweilige Transportbehältnis (12) zeitweise einsetzbares Element umfasst, durch den Käsebruch zur Abtrennung von Molke aufnehmbar ist.
